(19) **Europäisches Patentamt**
**European Patent Office**
**Office européen des brevets**

(11) **EP 2 399 149 B1**

(12) **EUROPEAN PATENT SPECIFICATION**

(45) Date of publication and mention
of the grant of the patent:
**18.07.2012 Bulletin 2012/29**

(51) Int Cl.:
*G01S 7/52* (2006.01)       *G01S 15/89* (2006.01)
*G10K 11/30* (2006.01)

(21) Application number: **10707352.0**

(22) Date of filing: **16.02.2010**

(86) International application number:
**PCT/IB2010/050690**

(87) International publication number:
**WO 2010/095094 (26.08.2010 Gazette 2010/34)**

(54) **ULTRASONIC IMAGING WITH A VARIABLE REFRACTIVE LENS**

ULTRASCHALLABBILDUNG MIT EINER VARIABLEN REFRAKTIVEN LINSE

IMAGERIE ULTRASONORE AVEC LENTILLE À RÉFRACTION VARIABLE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **20.02.2009 US 154140 P**

(43) Date of publication of application:
**28.12.2011 Bulletin 2011/52**

(73) Proprietor: **Koninklijke Philips Electronics N.V.
5621 BA Eindhoven (NL)**

(72) Inventors:
• **BURCHER, Michael, R.
NL-5656 AE Eindhoven (NL)**

• **SHI, Yan, S.
NL-5656 AE Eindhoven (NL)**
• **ROBERT, Jean-luc
NL-5656 AE Eindhoven (NL)**

(74) Representative: **Van Velzen, Maaike Mathilde
Philips
Intellectual Property & Standards
P.O. Box 220
5600 AE Eindhoven (NL)**

(56) References cited:
**WO-A1-2008/084455      WO-A1-2008/090504
WO-A2-2007/133878      US-B1- 6 589 177**

## Description

FIELD OF THE INVENTION

The invention relates to a method for producing an ultrasound image with a variable refractive lens.

The invention further relates to an imaging system comprising a variable refractive lens arranged for producing an ultrasound image and to a computer program product being adapted to enable a computer system comprising at least one computer having data storage means associated therewith to control such imaging system.

BACKGROUND OF THE INVENTION

Conventional ultrasound is performed by using an array of elements to focus and steer ultrasound beams in a pulse-echo fashion. The signals received by the array are beamformed by delaying and summing them. By applying different delays to the same received data, multiple receive beams can be formed for a single transmit event. Systems today typically use 2 or 4 receive beams (or multi-lines) to increase frame rates.

Fluid focus technology has been proposed for use in ultrasound imaging. A Fluid focus lens can be constructed from two immiscible liquids with differing sound speeds. Refraction occurs at the interface between the liquids and this can be used to focus or steer the ultrasound beam. When a voltage is applied between the liquid and the enclosure, electrowetting causes the meniscus to move. This allows the focal depth and inclination of the interface to be controlled by varying the voltage. Fluid focus technology accordingly provides a very flexible variable refractive lens with numerous applications in various kind of imaging, e.g. optical and ultrasonic imaging.

Fluid focus technology is particularly suited for high frequency applications requiring small apertures (gravitational effects are problematic with larger lenses). Examples of this include intra-cardiac imaging with a catheter-based probe.

For intra-cardiac imaging (and especially lesion monitoring) extremely high axial resolution and hence ultrasound frequencies are required. A typical center frequency would be 25MHz. This corresponds to a wavelength • of 62μm. To construct a conventional phased array requires an element pitch of •/2 = 31μm, which is an extreme challenge from a technical point of view. The fluid focus technology offers a nice solution - it allows the beam to be coarse steered to form the image, but a high frequency single-element transducer can still be used. Unfortunately the fluid focus lens is only capable of being steering in a single direction at a time due to the fixed focus, so no receive multi-line is possible. In addition it is not possible to carry out dynamic receive focusing (whereby the receive focus is moved deeper as the line is received). The resulting images therefore have a fixed focus in both transmit and receive and this limits their resolution away from the focus. Hence, an improved method for producing an ultrasound image with a variable refractive lens would be advantageous, and in particular a more efficient and/or reliable method for such use would be advantageous.

SUMMARY OF THE INVENTION

Accordingly, the invention preferably seeks to mitigate, alleviate or eliminate one or more of the above mentioned disadvantages singly or in any combination. In particular, it may be seen as an object of the present invention to provide a method for producing an ultrasound image with a variable refractive lens that solves the above mentioned problems of the prior art with the need for relatively small transducers for high frequency ultrasonic applications.

This object and several other objects are obtained in a first aspect of the invention by providing a method for producing an ultrasound image with a variable refractive lens, comprising:

transmitting a plurality of transmit beams from an array of transducers, each transmit beam being centered at a different position along the array and each transmit beam encompassing a plurality of laterally spaced line positions which are spatially related to laterally spaced line positions of another beam, each transit beam being transmitted through the variable refractive lens with an associated lens shape;

receiving echo signals with the array of transducers, each echo signal being received through the variable refractive lens with an associated lens shape;

producing a plurality of receive lines of echo signals at the laterally spaced line positions of the receive beam by

1) concurrently processing the echo signals received in response to one transmit beam; or
2) or repeatedly transmitting transmit events corresponding to the same transmit beam and for each receiving echo signals from a different direction

repeating producing a plurality of receive lines of echo signals for additional transmit beams;

combining echo signals of receive lines from different transmit beams which are spatially related to produce image data; and

producing an image using the image data,

wherein at least a sub-group of transducers in the said array of transducers has a width, *W*, significantly larger than half the center wavelength of the transmit pulses, the width, *W*, being at least 5 times larger than half the center wavelength of the transmit pulses.

The invention is particularly, but not exclusively, advantageous for providing a method for high frequency ultrasonic imaging with the transducers being larger sized than hitherto needed for high frequency applications. The array of transducers does not need to be "well-sampled"; i.e. having the width or size being comparably to the center wavelength of the ultrasonic signals to be received. This is particularly important at very high frequencies where well-sampled arrays would require very small elements that would be very challenging to manufacture.

When repeatedly transmitting transmit beams and receiving echo signals from different directions to produce a plurality of receive lines of echo signals at the laterally spaced line positions of the beam, i.e. when obtaining the echo signal in a sequential manner, it may be possible to implement the processing in a comparably simple manner.

In particular, the width, *W*, may be at least 10, 15 or 20 times larger than half the center wavelength of the transmit pulses. The present invention thereby enables simplified hardware implementation of transducers for ultrasonic imaging, preferably at high frequencies. In a special embodiment, all of the transducers in the array, i.e. not just a subgroup, may have a width, *W*, significantly larger than half the center wavelength of the transmit pulses.

In a particular embodiment, the minimum number of transducers in the said array, *N_elements,* may be given by the inequality;

$$N\_elements = D/W > (N\_transmits - 1)/2 * 1/(M\_sa,gla)$$

where

*D* is the transmit aperture,
*W* is the width of each transducer at least in a sub-group of the transducers,
*N_transmits* is the number of transmits from which spatially related echo signals are combined, and
*M_sa,gla* is the maximum accepted relationship between steering angle and grating lobe angle of the refractive lens and the array of transducers.

From these parameters it is accordingly possible to arrive at a minimum number of transducers in the array for advantageous implementation of the present invention. It should be noted that the width of each transducer, *W*, may be higher than hitherto seen, especially for high frequencies of transmits.

Typically, the number of transducers in the array, *N_elements,* may be above 5, 10, 15 or 20. Preferably, the transmit beam may be ultrasonic high frequency pulses, preferably with center frequency of at least 10 MHz, 20 MHz, 25 MHz, 30 MHz, 40 MHz or 50 MHz.

Optionally, at least a sub-group of transducers, in the said array of transducers, may have a width, *W*, above 0.1, 0.2 or 0.3 mm. Typically, the transducers have almost same shape and size, but it is also not the case.

Typically, the maximum accepted relationship between steering angle and grating lobe angle, M, of the refractive lens and the array of transducers may be in the interval of approximately 5-40%, preferably 10-35%, more preferably 15-25% depending on the specific choice of design for the ultrasonic imaging.

Normally, the number of transmits from which spatially related echo signals are combined, N_transmits, may be chosen from the group of ; 2, 4, 8, 16, 32, 64, and 128. Advantageous results with low signal to noise ratio (SNR) have for example been obtained by the present inventors for N_transmits = 4.

In some embodiments, the lens shape of the variable refractive lens may be varied for different transmit beams i.e. coarse steering of the imaging beam can be made feasible by the lens. Preferably, the variable refractive lens may be a fluid lens, preferably an electrowetting liquid lens.

In a second aspect, the present invention relates to an imaging system arranged for producing an ultrasound image, comprising:

a variable refractive lens, and
an array of transducers for transmitting a plurality of transmit beams from, each transmit beam being centered at a different position along the array and each transmit beam encompassing a plurality of laterally spaced line positions which are spatially related to laterally spaced line positions of another beam, each transit beam being transmitted through the variable refractive lens with an associated lens shape;

the system being arranged for:

receiving echo signals with the array of transducers, each echo signal being received through the variable refractive lens with an associated lens shape;

producing a plurality of receive lines of echo signals at the laterally spaced line positions of the receive beam by concurrently processing the echo signals received in response to one transmit beam; or

repeatedly transmitting transmit events corresponding to the same transmit beam and for each receiving echo signals from a different direction,

repeating producing a plurality of receive lines of echo signals for additional transmit beams;

combining echo signals of receive lines from different transmit beams which are spatially related to produce image data; and

producing an image using the image data,

wherein at least a sub-group of transducers in the said array of transducers has a width, W, significantly larger than half the center wavelength of the transmit pulses, the width, W, being at least 5 times larger than half the center wavelength of the transmit pulses.

In a third aspect, the invention relates to a computer program product being adapted to enable a computer system comprising at least one computer having data storage means associated therewith to control an imaging system according to the third aspect of the invention.

This aspect of the invention is particularly, but not exclusively, advantageous in that the present invention may be implemented by a computer program product enabling a computer system to perform the operations of the second aspect of the invention. Thus, it is contemplated that some known imaging system may be changed to operate according to the present invention by installing a computer program product on a computer system controlling the said apparatus. Such a computer program product may be provided on any kind of computer readable medium, e.g. magnetically or optically based medium, or through a computer based network, e.g. the Internet.

The first, second and third aspect of the present invention may each be combined with any of the other aspects. These and other aspects of the invention will be apparent from and elucidated with reference to the embodiments described hereinafter.

BRIEF DESCRIPTION OF THE FIGURES

The present invention will now be explained, by way of example only, with reference to the accompanying Figures, where

Figure 1 is a schematic drawing of an imgaing system with a variable refractive lens comprising an array of transducers according to the present invention, Figures 2-4 are schematic drawings for illustrating the method for producing an ultrasonic image according to the present invention,

Figure 5 is a graph showing the relative amplitude as a function of the relationship between array steering angle and grating lobe angle for the array of transducers,

Figure 6 is schematic drawing illustrating the dynamic receive of echo signals according to the present invention, and Figure 7 is a flow chart of a method according to the invention.

DETAILED DESCRIPTION OF EMBODIMENTS

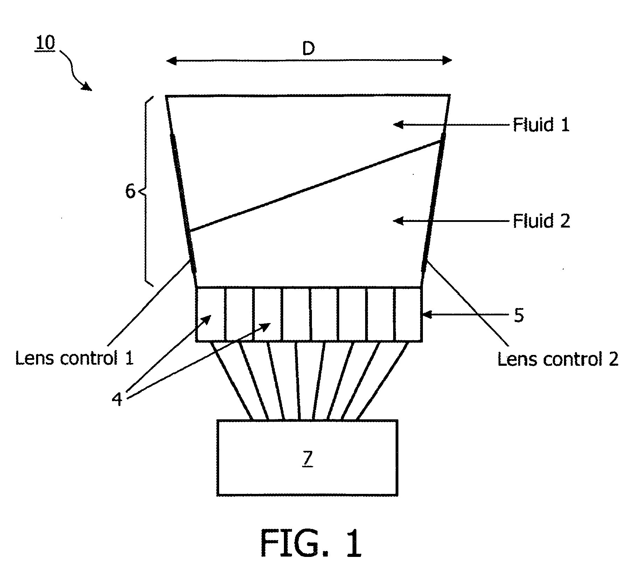

Figure 1 is a schematic drawing of an imaging system 10 with a variable refractive lens 6 with a fluid 1 and a fluid 2. The lens is in this embodiment an electrowetting lens and further details and references about this lens can be found in "Apparatus for forming Variable Fluid Meniscus Configurations", WO 2004/0051323 and WO 2008/084455 both to the same applicant. The lens 6 has appropriate voltage control as indicated on the sides of the lens 6.

Underneath the lens 6, an array 5 of transducers 4 is positioned. The lens 6 is used to effect coarse steering. It steers the transmit beam and remains pointing in the same direction during receive. Echoes arriving from on axis (and from the receive focal depth) will be well-aligned across the multi-element array. The signals on the array elements are received by the multi-channel receive beamformer 7. This will typically be a digital sampling beamformer. By altering the relative delay between the signals received on the different elements, it is possible for the receive beamformer to steer the receive beam away from the on-axis direction (as defined by the fluid focus lens). In addition, the receive beamformer 7 can effect dynamic receive focusing by varying the inter-element delay during the receive event. The beam former 7 is shown underneath the lens 6 but in a practical imaging system, e.g. a catheter, the beam former may be positioned distant from the lens 6. An appropriate beamformer 7 for implementing the present invention can be found in WO 2007/133878 to the same applicant.

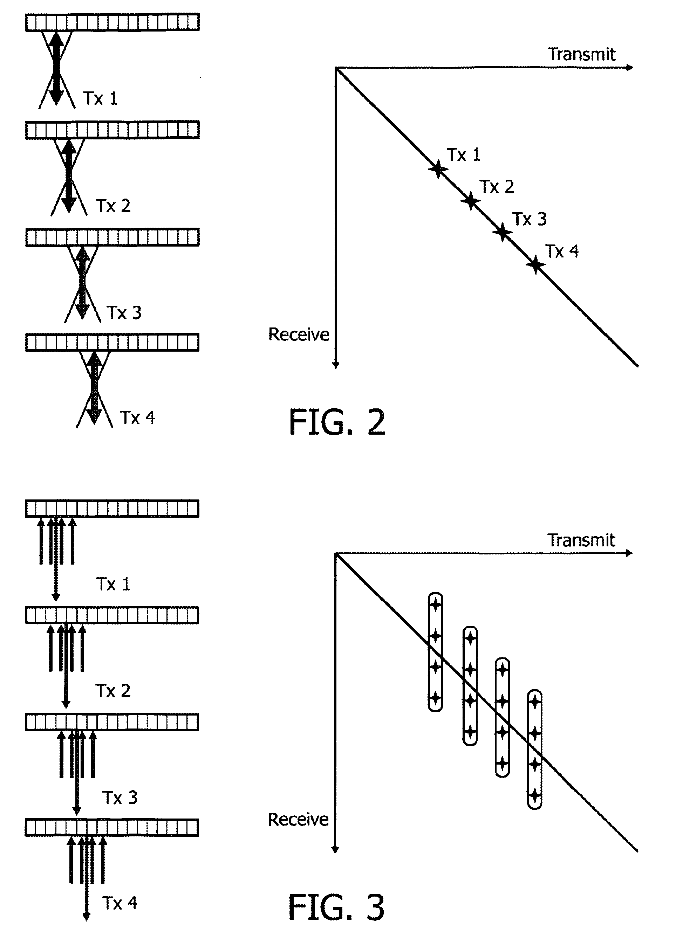

A conventional scanning process can be represented on a transmit-receive diagram as shown in Figure 2. Transmit beams and receive beams are in the same direction. Both are translated by the same amount between successive image lines. This sequence is represented by the stars on the transmit-receive diagram (right), which lie along the line with slope -1. An image can be formed by transmitting and receiving beams with different angular directions, or (as shown) with different lateral offsets.

Figure 3 is a transmit-receive diagram for acquisition according to the present invention using a 4x beamformer for illustrative purposes.

A multiline beamformer is capable of forming several receive lines for a single transmit event. The different receive lines are formed by applying different sets of delays to the same per-channel receive data. These receive lines correspond to receive beams that have different directions or different lateral offsets. With conventional imaging these multilines are usually used to increase the round-trip line density. For example, two receive beams can be used, one on either side of the transmit beam.

The spacing between receive beams is equal to the spacing between transmit beams. The receive beams for successive transmit events overlap by 3. The lines received from a given transmit event are enclosed in a box encircling the stars representing the echo signals.

With the present invention, the multilines are used in a special configuration. An example with a 4x multiline beamformer is shown in Figure 3. The receive beams are parallel and spaced by an amount equal to the transmit spacing. The receive beams for successive transmits overlap by 3.

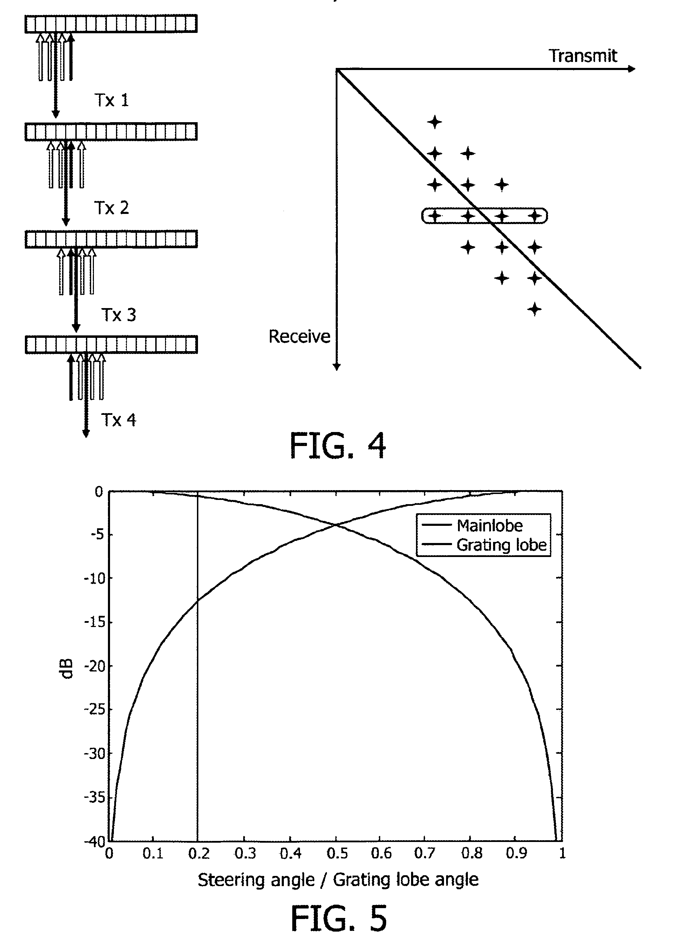

Consider the 4th (right-most) receive line for the first transmit. This receive line is also formed for the other three transmits. This is highlighted by the horizontal encircling box in the transmit-receive diagram of Figure 4. The present invention operates on the signals from these four transmit-receive events. Since the signals being combined correspond to the same receive beam, the combination may be said to happen in the transmit space. Thus, combining these echo signals of receive lines from different transmit beams, which are spatially related may be beneficially applied to produce image data according to the present invention.

In one embodiment, the data aquistion of the echo signals corresponding to a given transmit beam can be made from one transmit event, i.e. four echo signals are received. In another embodiment, a transmit event can give rise to the several echo signals but only one is received at first, and afterward a substantially identical transmit event occurs and another echo signal in a "column" (receive direction) of figure 3 or 4 is received. This is repeated to sequentially obtain the echo signals corresponding to the given transmit beam. This sequential acquisition may be beneficial for simplified processing.

Figure 5 is a graph showing the relative amplitude as a function of the relationship between array steering angle and grating lobe angle for an array of transducers i.e. the strength of main lobe and grating lobe for different steering angles. The x-axis is steering angle as a proportion of the grating lobe angle (=•/W (radians)). W is the width of the transducers. Zero angle corresponds to steering the receive in the same direction as the transmit. The value of 1 corresponds to steering the receive in the grating lobe direction. The vertical line shows the rule of thumb - steering angles less than 20% of the grating lobe angle are acceptable.

Taking the operating frequency as 25 MHz, which gives a wavelength • of 62$\mu$m. Assuming that one wishes to perform the invention by combining 4 transmits spaced at the Nyquist spacing. This requires the multi-lines be spaced (a maximum) of ($N\_transmits$ -1)/2 *• Tx from the transmit direction, where $N\_transmits$ is the number of combined transmits and • Tx is the angular transmit spacing. For $N\_transmits$ = 4, maximum multi-line spacing = (4-1)/2 $*$ • Tx = 3/2 $*$ • Tx.

If the transmits being combined are spaced at Nyquist, • Tx = •/D, where D is the transmit aperture. Therefore, max multi-line spacing = 3/2 $*$ •/D. In order to meet the grating lobe requirements, it is required:

$$0.2 * • /W > 3/2 * •/D$$

$$D/W > 3/(2*0.2) = 7.5$$

D/W is simply the number of array elements in the transmit array. Therefore, the number of elements should be larger than or equal to 8, N_elements • 8.

If for example the aperture is 1.5mm, then the element size or width required is 1.5 / 8 = 0.1875 mm. It is practicable to fabricate piezoelectric elements with this pitch using standard dicing methods.

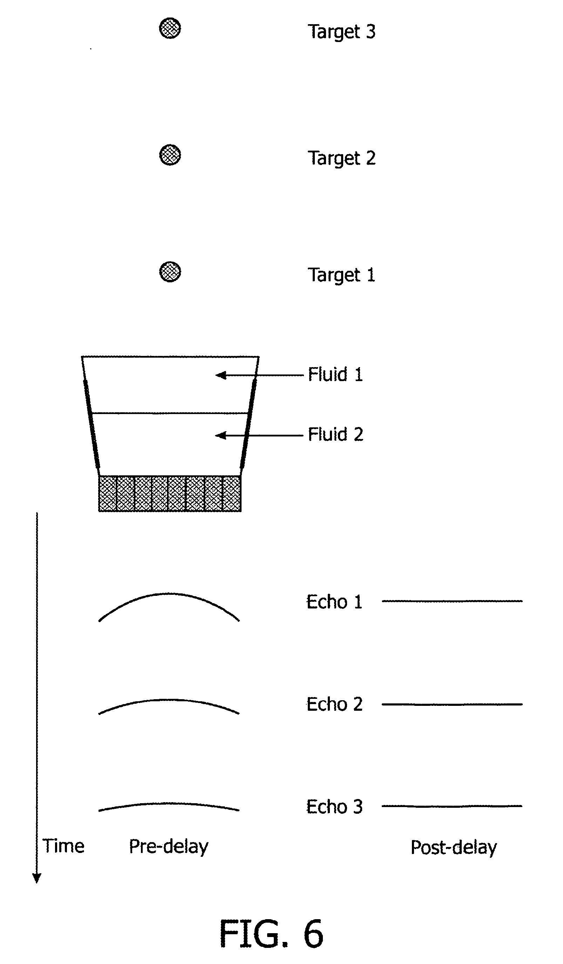

Figure 6 is schematic drawing illustrating the dynamic receive of echo signals. Inertial effects limit the speed at which the fluid focus lens can be adjusted. This means that the receive focus is usually fixed. The current invention can be used to effect dynamic focusing by varying the inter-element delays over the time that the signals are being received. This is shown in Figure 6 where wavefronts received from different depths within the medium containing the object have different curvatures. By varying the inter-element delay, the present invention may enable that the echoes are well-aligned no matter what depth they arrive from. The amounts of delay that are required are fairly small for this phased array configuration. For example, say that target1 is at a depth of 2mm, then the distance between the target and the edge of the array is $\bullet$ $(2^2+0.75^2)$ = 2.136mm, so that the difference in delay between the center of the array and the edge is 2.136-2 = 0.136mm $\bullet$ 2 $\bullet$. For target 3 at a depth of 10mm (typically the maximum depth of interest), the difference is even smaller: $\bullet$ $(10^2+0.75^2)$ = 10.028mm, so the difference in delay between the center and the edge is 0.028mm $\bullet$ 1/2 $\bullet$.

The current invention may also allow for dynamic apodization to be used. The receive aperture expands during the receive event: gradually more elements are added to the summation.

The present invention may further be applied for focusing the transmit beam. If the array elements are individually connected to transmitters, then the waveforms transmitted by each element can be phased or time shifted to effect transmit focusing.

The transmit can be focused or diverging. Transmit apodization is also possible.

The invention can also be implemented using an annular array of transducers. This permits the use of dynamic focusing and apodization on receive. It also permits the use of different fixed focal depths and apodizations on transmit.

The present invention can be used in the field of ultrasound imaging, in particular intra-cardiac catheter-based imaging. Such devices have been proposed for use in therapy monitoring for electrophysiology procedures for the treatment of atrial fibrillation.

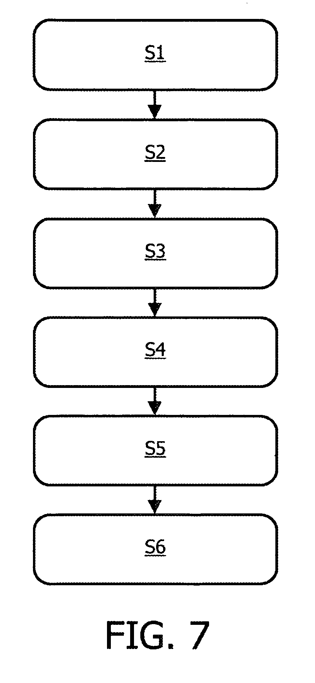

Figure 7 is a flow chart of a method according to the invention for producing an ultrasound image with a variable refractive lens 6, cf. Figure 1, comprising:

S1 transmitting a plurality of transmit beams, Tx1-Tx4, cf. Figures 2-4, from an array of transducers 5, each transmit beam being centered at a different position along the array and each transmit beam encompassing a plurality of laterally spaced line positions which are spatially related to laterally spaced line positions of another beam, each transit beam being transmitted through the variable refractive lens 6 with an associated lens shape;

S2 receiving echo signals with the array of transducers 5, each echo signal being received through the variable refractive lens 6 with an associated lens shape;

S3 producing a plurality of receive lines of echo signals at the laterally spaced line positions of the receive beam by concurrently processing the echo signals received in response to one transmit beam; or

repeatedly transmitting transmit events corresponding to the same transmit beam and for each receiving echo signals from a different direction,

S4 repeating producing a plurality of receive lines of echo signals for additional transmit beams;

S5 combining echo signals of receive lines from different transmit beams which are spatially related to produce image data; and

S6 producing an image using the image data

The invention can be implemented in any suitable form including hardware, software, firmware or any combination of these. The invention or some features of the invention can be implemented as computer software running on one or more data processors and/or digital signal processors. The elements and components of an embodiment of the invention may be physically, functionally and logically implemented in any suitable way. Indeed, the functionality may be implemented in a single unit, in a plurality of units or as part of other functional units. As such, the invention may be implemented in a single unit, or may be physically and functionally distributed between different units and processors.

Although the present invention has been described in connection with the specified embodiments, it is not intended to be limited to the specific form set forth herein. Rather, the scope of the present invention is limited only by the accompanying claims.

## Claims

1. A method for producing an ultrasound image with a variable refractive lens (6), comprising:

transmitting a plurality of transmit beams (Tx1-Tx4) from an array of transducers (5), each transmit beam being centered at a different position along the array and each transmit beam encompassing a plurality of laterally spaced line positions which are spatially related to laterally spaced line positions of another beam, each transit beam being transmitted through the variable refractive lens (6) with an associated lens shape;

receiving echo signals with the array of transducers (5), each echo signal being received through the variable refractive lens (6) with an associated lens shape;
producing a plurality of receive lines of echo signals at the laterally spaced line positions of the receive beam by concurrently processing the echo signals received in response to one transmit beam; or
repeatedly transmitting transmit events corresponding to the same transmit beam and for each receiving echo signals from a different direction,
repeating producing a plurality of receive lines of echo signals for additional transmit beams;
combining echo signals of receive lines from different transmit beams which are spatially related to produce image data; and
producing an image using the image data,

wherein at least a sub-group of transducers in the said array of transducers has a width, *W*, significantly larger than half the center wavelength of the transmit pulses, the width, *W*, being at least 5 times larger than half the center wavelength of the transmit pulses.

2. The method according to claim 1, wherein the minimum number of transducers in the said array, *N_elements,* is given by the inequality;

$$N\_elements = D/W > \left\lceil (N\_transmits - 1)/2 \right\rceil * \left\lceil 1/(M\_sa,gla) \right\rceil$$

where *D* is the transmit aperture,
*W* is the width of each transducer at least in a sub-group of the transducers, *N_transmits* is the number of transmits from which spatially related echo signals are combined, and
*M_sa,gla* is the maximum accepted relationship between steering angle and grating lobe angle of the refractive lens and the array of transducers.

3. The method according to claim 2, wherein the number of transducers in the array, *N_elements,* is above 5, 10, 15 or 20.

4. The method according to claim 2, wherein the transmit beam are ultrasonic high frequency pulses, preferably with center frequency of at least 20 MHz, 25 MHz, 30 MHz, 40 MHz or 50 MHz

5. The method according to claim 2, wherein at least a sub-group of transducers, in the said array of transducers, have a width, *W*, above 0.1, 0.2 or 0.3 mm.

6. The method according to claim 2, wherein the maximum accepted relationship between steering angle and grating lobe angle, M, of the refractive lens and the array of transducers is in the interval of approximately 5-40%, preferably 10-35%, more preferably 15-25%.

7. The method according to claim 2, wherein the number of transmits from which spatially related echo signals are combined, N_transmits, is chosen from the group of ; 2, 4, 8, 16, 32, 64, and 128.

8. The method according to claim 1, wherein the lens shape of the variable refractive lens is varied for different transmit beams.

9. The method according to claim 1, wherein the variable refractive lens is a fluid lens, preferably an electrowetting liquid lens.

10. An imaging system (10) arranged for producing an ultrasound image, comprising:

a variable refractive lens (6), and
an array of transducers (5) for transmitting a plurality of transmit beams (Tx1-Tx4) from, each transmit beam being centered at a different position along the array and each transmit beam encompassing a plurality of laterally spaced line positions which are spatially related to laterally spaced line positions of another beam, each transit beam being transmitted through the variable refractive lens (6) with an associated lens shape;
the system being arranged for:

receiving echo signals with the array of transducers (5), each echo signal being received through the variable refractive lens (6) with an associated lens shape;

producing a plurality of receive lines of echo signals at the laterally spaced line positions of the receive beam by

concurrently processing the echo signals received in response to one transmit beam; or

repeatedly transmitting transmit events corresponding to the same transmit beam and for each receiving echo signals from a different direction,

repeating producing a plurality of receive lines of echo signals for additional transmit beams;

combining echo signals of receive lines from different transmit beams which are spatially related to produce image data; and

producing an image using the image data,

wherein at least a sub-group of transducers in the said array of transducers has a width, *W*, significantly larger than half the center wavelength of the transmit pulses, the width, *W*, being at least 5 times larger than half the center wavelength of the transmit pulses.

11. A computer program product that when carried out on a computer system performs the method of claim 1.


**Patentansprüche**

1. Verfahren zum Erzeugen eines Ultraschallbildes mit einer variablen refraktiven Linse (6), wobei das Verfahren Folgendes umfasst:

Senden einer Vielzahl von Sendestrahlenbündeln (Tx1-Tx4) von einem Wandlerarray (5), wobei jedes Sendestrahlenbündel auf eine andere Position entlang des Arrays zentriert ist und jedes Sendestrahlenbündel eine Vielzahl von in einem lateralen Abstand angeordneten Linienpositionen umfasst, die räumlich mit in einem lateralen Abstand angeordneten Linienpositionen eines anderen Strahlenbündels zusammenhängen, wobei jedes Sendestrahlenbündel durch die variable refraktive Linse (6) mit einer zugehörigen Linsenform gesandt wird;

Empfangen von Echosignalen mit dem Wandlerarray (5), wobei jedes Echosignal durch die variable refraktive Linse (6) mit einer zugehörigen Linsenform empfangen wird;

Erzeugen einer Vielzahl von Empfangslinien von Echosignalen an in einem lateralen Abstand angeordneten Linienpositionen des Empfangsstrahlenbündels durch

gleichzeitiges Verarbeiten der in Reaktion auf ein einzelnes Sendestrahlenbündel empfangenen Echosignale; oder

wiederholtes Senden von Sendeereignissen, die dem gleichen Sendestrahlenbündel entsprechen, und Empfangen von Echosignalen aus einer anderen Richtung für jedes von ihnen;

Wiederholen des Erzeugens einer Vielzahl von Empfangslinien von Echosignalen für zusätzliche Sendestrahlenbündel;

Kombinieren von Echosignalen der Empfangslinien von verschiedenen Sendestrahlenbündeln, die in räumlichem Zusammenhang stehen, um Bilddaten zu erzeugen; und

Erzeugen eines Bildes anhand der Bilddaten,

wobei mindestens eine Teilgruppe von Wandlern in dem genannten Wandlerarray eine Breite W hat, die wesentlich größer ist als die Hälfte der Mittenwellenlänge der Sendeimpulse, wobei die Breite W mindestens 5 Mal größer ist als die Hälfte der Mittenwellenlänge der Sendeimpulse.

2. Verfahren nach Anspruch 1, wobei die Mindestanzahl von Wandlern in dem genannten Array, *N_elements,* gegeben ist durch die Ungleichung:

$$N\_elements = D/W > [(N\_transmits - 1)/2] * [1/(M\_sa,gla)],$$

wobei
*D* die Sendeapertur ist,
*W* die Breite jedes Wandlers zumindest in einer Teilgruppe der Wandler ist,

*N_transmits* die Anzahl der Aussendungen ist, von denen räumlich zusammenhängende Echosignale kombiniert werden, und

*M_sa,gla* das maximal akzeptierte Verhältnis zwischen Lenkungswinkel und Gitterkeulenwinkel der refraktiven Linse und des Wandlerarrays ist.

3. Verfahren nach Anspruch 2, wobei die Anzahl der Wandler in dem Array, *N_elements,* mehr als 5, 10, 15 oder 20 beträgt.

4. Verfahren nach Anspruch 2, wobei die Sendestrahlenbündel Ultraschall-Hochfrequenzimpulse sind, vorzugsweise mit einer Mittenfrequenz von mindestens 20 MHz, 25 MHz, 30 MHz, 40 MHz oder 50 MHz.

5. Verfahren nach Anspruch 2, wobei mindestens eine Teilgruppe von Wandlern in dem genannten Wandlerarray eine Breite *W* von mehr als 0,1 mm, 0,2 mm oder 0,3 mm haben.

6. Verfahren nach Anspruch 2, wobei das maximal akzeptierte Verhältnis zwischen Lenkungswinkel und Gitterkeulenwinkel, *M*, der refraktiven Linse und des Wandlerarrays in dem Intervall von ca. 5-40%, vorzugsweise in dem Intervall von 10-35%, noch mehr vorzuziehen in dem Intervall von 15-25%, liegt.

7. Verfahren nach Anspruch 2, wobei die Anzahl der Aussendungen, von denen räumlich zusammenhängende Echosignale kombiniert werden, *N_transmits,* gewählt wird aus der Gruppe: 2, 4, 8, 16, 32, 64 und 128.

8. Verfahren nach Anspruch 1, wobei die Linsenform der variablen refraktiven Linse für verschiedene Sendestrahlenbündel variiert wird.

9. Verfahren nach Anspruch 1, wobei die variable refraktive Linse eine Fluidlinse ist, vorzugsweise eine Elektrobenetzungs-Flüssigkeitslinse.

10. Bildgebungssystem (10), das vorgesehen ist, um ein Ultraschallbild zu erzeugen, wobei das Bildgebungssystem Folgendes umfasst:

    eine variable refraktive Linse (6), und
    ein Wandlerarray (5) zum Senden einer Vielzahl von Sendestrahlenbündeln (Tx1-Tx4), wobei jedes Sendestrahlenbündel auf eine andere Position entlang des Arrays zentriert ist und jedes Sendestrahlenbündel eine Vielzahl von in einem lateralen Abstand angeordneten Linienpositionen umfasst, die räumlich mit in einem lateralen Abstand angeordneten Linienpositionen eines anderen Strahlenbündels zusammenhängen, wobei jedes Sendestrahlenbündel durch die variable refraktive Linse (6) mit einer zugehörigen Linsenform gesandt wird;
    wobei das System vorgesehen ist zum
    Empfangen von Echosignalen mit dem Wandlerarray (5), wobei jedes Echosignal durch die variable refraktive Linse (6) mit einer zugehörigen Linsenform empfangen wird;
    Erzeugen einer Vielzahl von Empfangslinien von Echosignalen an in einem lateralen Abstand angeordneten Linienpositionen des Empfangsstrahlenbündels durch
    gleichzeitiges Verarbeiten der in Reaktion auf ein einzelnes Sendestrahlenbündel empfangenen Echosignale; oder
    wiederholtes Senden von Sendeereignissen, die dem gleichen Sendestrahlenbündel entsprechen, und Empfangen von Echosignalen aus einer anderen Richtung für jedes von ihnen;
    Wiederholen des Erzeugens einer Vielzahl von Empfangslinien von Echosignalen für zusätzliche Sendestrahlenbündel;
    Kombinieren von Echosignalen der Empfangslinien von verschiedenen Sendestrahlenbündeln, die in räumlichem Zusammenhang stehen, um Bilddaten zu erzeugen; und
    Erzeugen eines Bildes anhand der Bilddaten,

    wobei mindestens eine Teilgruppe von Wandlern in dem genannten Wandlerarray eine Breite *W* hat, die wesentlich größer ist als die Hälfte der Mittenwellenlänge der Sendeimpulse, wobei die Breite *W* mindestens 5 Mal größer ist als die Hälfte der Mittenwellenlänge der Sendeimpulse.

11. Computerprogrammprodukt, das, wenn es auf einem Computersystem ausgeführt wird, das Verfahren nach Anspruch 1 durchführt.

**Revendications**

1. Procédé pour produire une image par ultrasons avec une lentille de réfraction variable (6), comprenant les faits de :

   transmettre une pluralité de faisceaux de transmission (Tx1-Tx4) à partir d'un ensemble de transducteurs (5), chaque faisceau de transmission étant centré dans une position différente le long de l'ensemble et chaque faisceau de transmission englobant une pluralité de positions linéaires espacées latéralement qui sont spatialement connexes à des positions linéaires espacées latéralement d'un autre faisceau, chaque faisceau de transmission étant transmis à travers la lentille de réfraction variable (6) avec une forme de lentille associée ;
   recevoir des signaux d'écho avec l'ensemble de transducteurs (5), chaque signal d'écho étant reçu à travers la lentille de réfraction variable (6) avec une forme de lentille associée ;
   produire une pluralité de lignes de réception de signaux d'écho dans les positions linéaires espacées latéralement du faisceau de réception en traitant simultanément les signaux d'écho reçus en réponse à un faisceau de transmission ; ou
   transmettre à plusieurs reprises des événements de transmission correspondant au même faisceau de transmission et, pour chacun, recevoir des signaux d'écho à partir d'une direction différente ;
   répéter le fait de produire une pluralité de lignes de réception de signaux d'écho pour des faisceaux de transmission supplémentaires ;
   combiner des signaux d'écho de lignes de réception à partir de différents faisceaux de transmission qui sont spatialement connexes pour produire des données d'image ; et
   produire une image en utilisant les données d'image ;

   dans lequel au moins un sous-groupe de transducteurs dans ledit ensemble de transducteurs possède une largeur, W, sensiblement supérieure à la moitié de la longueur d'onde centrale des impulsions de transmission, la largeur, W, étant au moins 5 fois plus importante que la moitié de la longueur d'onde centrale des impulsions de transmission.

2. Procédé selon la revendication 1, dans lequel le nombre minimum de transducteurs dans ledit ensemble, N_elements, est donné par l'inégalité :

$$N\_elements = D/W > [(N\_transmits - 1)/2] * [1/(M\_sa,g1a)]$$

   où
   D est l'ouverture de transmission,
   W est la largeur de chaque transducteur au moins dans un sous-groupe des transducteurs,
   N_transmits est le nombre de transmissions à partir desquelles des signaux d'écho spatialement connexes sont combinés, et
   M_sa,gla est la relation acceptée maximum entre l'angle de braquage et l'angle de lobe secondaire de réseau de la lentille de réfraction et l'ensemble de transducteurs.

3. Procédé selon la revendication 2, dans lequel le nombre de transducteurs dans l'ensemble, N_elements, est supérieur à 5, 10, 15 ou 20.

4. Procédé selon la revendication 2, dans lequel le faisceau de transmission sont des impulsions à haute fréquence ultrasoniques, de préférence avec une fréquence centrale d'au moins 20 MHz, 25 MHz, 30 MHz, 40 MHz ou 50 MHz.

5. Procédé selon la revendication 2, dans lequel au moins un sous-groupe de transducteurs, dans ledit ensemble de transducteurs, possèdent une largeur, W, supérieure à 0,1, 0,2 ou 0,3 mm.

6. Procédé selon la revendication 2, dans lequel la relation acceptée maximum entre l'angle de braquage et l'angle de lobe secondaire de réseau, M, de la lentille de réfraction et l'ensemble de transducteurs est dans l'intervalle d'approximativement 5 à 40 %, de préférence 10 à 35 %, idéalement 15 à 25 %.

7. Procédé selon la revendication 2, dans lequel le nombre de transmissions à partir desquelles des signaux d'écho spatialement connexes sont combinés, N_transmits, est choisi parmi le groupe de : 2, 4, 8, 16, 32, 64, et 128.

8. Procédé selon la revendication 1, dans lequel la forme de lentille de la lentille de réfraction variable est variée pour différents faisceaux de transmission.

**9.** Procédé selon la revendication 1, dans lequel la lentille de réfraction variable est une lentille à fluide, de préférence une lentille à liquide à électro-mouillage.

**10.** Système d'imagerie (10) agencé pour produire une image par ultrasons, comprenant :

une lentille de réfraction variable (6), et
un ensemble de transducteurs (5) pour transmettre une pluralité de faisceaux de transmission (Tx1-Tx4), chaque faisceau de transmission étant centré dans une position différente le long de l'ensemble et chaque faisceau de transmission englobant une pluralité de positions linéaires espacées latéralement qui sont spatialement connexes à des positions linéaires espacées latéralement d'un autre faisceau, chaque faisceau de transmission étant transmis à travers la lentille de réfraction variable (6) avec une forme de lentille associée ;
le système étant agencé pour :

recevoir des signaux d'écho avec l'ensemble de transducteurs (5), chaque signal d'écho étant reçu à travers la lentille de réfraction variable (6) avec une forme de lentille associée ;
produire une pluralité de lignes de réception de signaux d'écho dans les positions linéaires espacées latéralement du faisceau de réception en traitant simultanément les signaux d'écho reçus en réponse à un faisceau de transmission ; ou
transmettre à plusieurs reprises des événements de transmission correspondant au même faisceau de transmission et, pour chacun, recevoir des signaux d'écho à partir d'une direction différente ;
répéter le fait de produire une pluralité de lignes de réception de signaux d'écho pour des faisceaux de transmission supplémentaires ;
combiner des signaux d'écho de lignes de réception à partir de différents faisceaux de transmission qui sont spatialement connexes pour produire des données d'image ; et
produire une image en utilisant les données d'image ;

dans lequel au moins un sous-groupe de transducteurs dans ledit ensemble de transducteurs possède une largeur, W, sensiblement supérieure à la moitié de la longueur d'onde centrale des impulsions de transmission, la largeur, W, étant au moins 5 fois plus importante que la moitié de la longueur d'onde centrale des impulsions de transmission.

**11.** Produit programme d'ordinateur qui, lorsqu'il est réalisé sur un système d'ordinateur, réalise le procédé selon la revendication 1.

**FIG. 1**

FIG. 2

FIG. 3

Tx 1

Tx 2

Tx 3

Tx 4

Transmit

Receive

# FIG. 4

Steering angle / Grating lobe angle

- Mainlobe
- Grating lobe

# FIG. 5

Target 3

Target 2

Target 1

Fluid 1

Fluid 2

Echo 1

Echo 2

Echo 3

Time    Pre-delay                                    Post-delay

# FIG. 6

S1

↓

S2

↓

S3

↓

S4

↓

S5

↓

S6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20040051323 A
- WO 2008084455 A
- WO 2007133878 A